# EUROPÄISCHE PATENTSCHRIFT

(11) **EP 2 604 869 B1**
(45) Veröffentlichungstag und Bekanntmachung des Hinweises auf die Patenterteilung: **29.08.2018**
(21) Anmeldenummer: 12401246.9
(22) Anmeldetag: 11.12.2012
(51) Int. Cl.: F16B 13/06, F16B 13/08

(54) **Spreizanker und Verfahren zur Montage des Spreizankers**
Expansion anchor and method for mounting the expansion anchor
Ancre extensible et procédé de montage de l'ancre extensible

(30) Priorität: 13.12.2011 DE 102011056312; 08.11.2012 DE 102012110688
(43) Veröffentlichungstag der Anmeldung: 19.06.2013
(73) Patentinhaber: fischerwerke GmbH & Co. KG, 72178 Waldachtal (DE)
(72) Erfinder: Hacker, Oliver, 72160 Horb (DE); Schillinger, Peter, 72224 Ebhausen (DE); Schäuffele, Jürgen, 72290 Lossburg/Wittendorf (DE)

(56) Entgegenhaltungen:
- EP-A2- 1 211 430
- DE-U1- 9 310 356
- GB-A- 1 453 435

## Beschreibung

Die Erfindung betrifft einen Spreizanker mit den Merkmalen des Oberbegriffs des Anspruchs 1 und ein Verfahren zur Montage des Spreizankers.

Spreizanker mit Innengewinde zum Befestigen eines Gegenstands an einem Verankerungsgrund mit einer Schraube sind bekannt. Beispielsweise zeigt die Offenlegungsschrift DE 37 12 213 A1 einen Spreizanker mit einer Gewindehülse mit einem Innengewinde, an die sich einstückig ein Bolzen mit konusförmigen Ende anschließt. Das konusförmige Ende bildet ein Spreizelement, mit dem eine Spreizhülse, die in Längsrichtung verschieblich am Bolzen angeordnet ist, verspreizt werden kann. "Verspreizen" meint hier ein radiales Aufweiten der Spreizhülse, wodurch sie in einem Bohrloch gegen die Bohrlochwand gepresst wird, so dass auf Grund von Reibung Kräfte vom Spreizanker auf die Bohrlochwand übertragbar sind. Der Spreizanker muss mit Unterstand in das Bohrloch eingeführt werden, so dass der Spreizanker zum Verspreizen gegen den Gegenstand gezogen werden kann, ohne dass der Spreizanker am Gegenstand ansteht. Mit "Unterstand" ist ein Abstand zwischen dem Bohrlochmund, der Öffnung des Sackbohrlochs, und dem in Einbringrichtung hinteren Ende des Spreizankers gemeint. Nach dem Einführen in das Bohrloch liegt die Spreizhülse an der Bohrlochwand an, so dass sie ortsfest gehalten ist. Durch die Verschiebung der Gewindehülse in Richtung des Bohrlochmunds wird das Spreizelement in die Spreizhülse gezogen und die Spreizhülse aufgespreizt. Das Verspreizen erfolgt, wenn der Gegenstand mit der Schraube am Spreizanker befestigt und gegen den Verankerungsgrund verspannt wird. Damit der Unterstand zum Verspreizen des Spreizankers ausreicht, weist der Spreizanker an seinem hinteren Ende ein Abstandselement auf, das nach dem Einführen des Spreizankers bündig mit der Oberfläche des Verankerungsgrunds ist. Nach dem Einführen wird das Abstandselement vom Spreizanker entfernt, so dass der Spreizanker gegenüber der Oberfläche des Verankerungsgrunds einen definierten Unterstand aufweist. Nachteilig ist, dass an dem Spreizanker das Abstandselement als zusätzliches Bauteil angeordnet sein muss. Fehlt das Abstandselement, beispielsweise wenn es beim Transport verloren gegangen ist, so ist eine ordnungsgemäße Montage des Spreizankers nicht möglich. Zudem ist zur Montage des Spreizankers ein zusätzlicher Schritt, das Entfernen des Abstandselements, notwendig.

Das Patent GB 1 453 435 zeigt einen weiteren Spreizanker mit einer Gewindehülse, einem Spreizelement und einer Spreizhülse.

Aus der europäischen Patentanmeldung EP 0 741 250 A1 ist ein gattungsgemäßer Spreizanker gemäß dem Oberbegriff des Anspruchs 1 bekannt, der gemäß des Oberbegriffs des Anspruchs 8 in ein Bohrloch so eingebracht werden kann, dass er unter den Bohrlochmund untersteht. Der Spreizanker besteht aus einer Gewindehülse mit Innengewinde, an die sich in Einbringrichtung einstückig ein Gewindebolzen anschließt. Auf den Gewindebolzen ist eine Spreizhülse in Längsrichtung verschieblich aufgesetzt und eine Konusmutter aufgeschraubt, welche die Spreizhülse auf dem Gewindebolzen hält. Wird der Spreizanker in ein Bohrloch eingebracht, so liegt die Spreizhülse an der Bohrlochwand und an der Konusmutter an. Die Konusmutter und die Spreizhülse sind durch die zwischen den Bauteilen wirkende Reibung gegenüber der Bohrlochwand drehfest. Wird nun mit einem Werkzeug die Gewindehülse gedreht, so wird die Konusmutter auf den Gewindebolzen aufgeschraubt und der axiale Abstand zwischen der Gewindehülse und dem Spreizelement verkürzt. Dabei wird die Konusmutter in die Spreizhülse eingezogen und die Spreizhülse verspreizt. Der Spreizanker kann mit Unterstand in ein Bohrloch eingeführt werden, so dass der Spreizanker beim Einschrauben einer Schraube in das Innengewinde gegen der Gegenstand verspannt werden kann. Dabei wird die Gewindehülse in Richtung des Gegenstands bewegt, die Konusmutter weiter in die Spreizhülse gezogen und die Spreizhülse stärker aufgespreizt. Der Spreizanker weist allerdings kein Abstandselement auf, so dass der Unterstand nicht genau definiert ist und gegebenenfalls durch Messen bestimmt werden muss, was die Montage erschwert.

Ausgehend vom bekannten Stand der Technik ist die Aufgabe der Erfindung, einen Spreizanker zu schaffen, der diese Nachteile überwindet.

Diese Aufgabe wird erfindungsgemäß durch einen Spreizanker mit den Merkmalen des Anspruchs 1 und durch ein Verfahren zur Montage des Spreizankers mit den Merkmalen des Anspruchs 8 gelöst.

Der erfindungsgemäße Spreizanker weist eine Gewindehülse auf, an der in Einbringrichtung hinten ein nach hinten offenes Innengewinde zum Befestigen eines Gegenstands mit einer Schraube angeordnet ist. Mit "Einbringrichtung" ist hier die Richtung gemeint, in die der Spreizanker planmäßig in ein Bohrloch eingeführt wird. Die Gewindehülse kann an ihrem vorderen Ende offen oder geschlossen sein. Das Innengewinde ist insbesondere ein metrisches Gewinde. Zum Verankern des Spreizankers im Verankerungsgrund weist der Spreizanker ein Spreizelement und eine Spreizhülse auf. Die Spreizhülse kann durch das Spreizelement verspreizt, also in radialer Richtung geweitet werden. Die Spreizhülse besteht beispielsweise aus einem in Längsrichtung geschlitzten und in Umfangsrichtung gebogenen Blechstreifen. Das Spreizelement ist insbesondere konisch ausgebildet, sein Durchmesser nimmt in Einbringrichtung beispielsweise kegelartig zu. Insbesondere ist das Spreizelement eine Konusmutter mit kegelstumpfförmigem Abschnitt, die mit der Gewindehülse durch einen Gewindebolzen, der an der Gewindehülse angeordnet ist, drehbar gekoppelt ist. Der Gewindebolzen ist insbesondere einstückig mit der Gewindehülse verbunden. Alternativ kann das Spreizelement einstückig mit dem Gewindebolzen als Konusbolzen ausgeführt sein, der mit einem Außengewinde in ein zweites Innengewinde der Gewindehülse eingreift, das in Einbringrichtung vorne an der Gewindehülse angeordnet ist. Das vordere und das hintere Innengewinde der Gewindehülse können in der Spreizhülse gemeinsam ein durchgehendes Innengewinde bilden. Dadurch, dass die Gewindehülse mit dem Spreizelement durch ein Gewinde drehbar gekoppelt ist, kann der axiale Abstand zwischen der Gewindehülse und dem Spreizelement durch Drehen der Gewindehülse verkürzt werden. Durch das Drehen wird das konische Spreizelement durch das Gewinde in Richtung der Gewindehülse bewegt, dabei in die Spreizhülse eingezogen und die Spreizhülse verspreizt.

Erfindungsgemäß ist am Spreizanker in axialer Richtung zwischen der Gewindehülse und der Spreizhülse eine in axialer Richtung verkürzbare Distanzhülse angeordnet. Wird der axiale Abstand zwischen der Gewindehülse und dem Spreizelement durch das Drehen der Gewindehülse verkürzt, so wird die Distanzhülse in axialer Richtung gestaucht und der Abstand zwischen dem hinteren Ende des Spreizankers und dem Spreizelement verkürzt. "Axial" bedeutet hier in Richtung der Längsachse des Spreizankers, wobei sich die Längsachse parallel zur Einbringrichtung des Spreizankers in ein Bohrloch erstreckt. Das Verkürzen der Gewindehülse kann insbesondere durch elastisches und/oder plastisches Verformen und/oder durch teleskopartiges Ineinanderschieben erfolgen.

Zur Montage des erfindungsgemäßen Spreizankers wird zunächst ein Bohrloch in einem Verankerungsgrund erstellt und der Spreizanker in das Bohrloch so weit eingebracht, bis das in Einbringrichtung hintere Ende des Spreizankers im Wesentlichen bündig mit dem Bohrlochmund ist. Der Spreizanker kann beispielsweise vom Anwender in einfacher Weise mit einem Hammer durch Schläge auf das hintere Ende des Spreizankers eingebracht werden, ohne dass ein spezielles Setzwerkzeug notwendig ist. Der "Bohrlochmund" ist die hintere Öffnung des Bohrlochs, in das der Spreizanker eingebracht wird. Im Regelfall ist der Bohrlochmund an der Oberfläche des Verankerungsgrunds. Wenn sich das Bohrloch allerdings bis in den zu befestigenden Gegenstand erstreckt, beispielsweise wenn der Gegenstand beim Erstellen des Bohrlochs selbst durchbohrt wird, so kann der Bohrlochmund auch an der dem Verankerungsgrund abgewandten Seite des Gegenstands liegen.

Nach dem Einbringen in das Bohrloch liegt die Spreizhülse im Regelfall mit etwas Druck an der Bohrlochwand und am Spreizelement an. Durch die Anlage wirkt zwischen den Teilen eine Reibung, so dass die Bohrlochwand, die Spreizhülse und das Spreizelement gegeneinander im Wesentlichen drehfest sind. Die Spreizhülse stützt sich über die Distanzhülse an der Gewindehülse ab. Wird die Gewindehülse gegenüber dem Spreizelement gedreht, so verkürzt sich der axiale Abstand zwischen der Gewindehülse und dem Spreizelement, beispielsweise indem ein als Konusmutter ausgebildetes Spreizelement auf einen an der Gewindehülse angeordneten Gewindebolzen aufgeschraubt wird. Durch das Aufschrauben wird das Spreizelement in die Spreizhülse eingezogen und die Spreizhülse in radialer Richtung aufgespreizt. Durch das Aufspreizen wird die Reibung zwischen der Spreizhülse und der Bohrlochwand so stark erhöht, dass die Spreizhülse im Bohrloch ortsfest ist. Durch weiteres Drehen der Gewindehülse wird der Abstand zwischen der Gewindehülse und dem Spreizelement weiter verkürzt, wobei die Distanzhülse in axialer Richtung verkürzt und die Gewindehülse in das Bohrloch eingezogen wird, so dass sie unter dem Bohrlochmund untersteht. Bei weiterem Drehen der Gewindehülse erhöht sich das Drehmoment, das zum Verkürzen des axialen Abstands zwischen der Spreizhülse und der Gewindehülse auf die Gewindehülse aufgebracht werden muss. Beim Erreichen eines definierten Drehmoments weiß der Anwender, dass die Distanzhülse um ein bestimmtes Maß verkürzt und der gewünschte Unterstand erreicht ist. Das Aufspreizen der Spreizhülse und das Verkürzen der Distanzhülse sind zwei Schritte, die insbesondere nacheinander erfolgen. Ohne den Erfindungsgedanken zu verlassen, können sich die Schritte aber auch überschneiden.

Allein durch den Aufbau des erfindungsgemäßen Spreizankers wird erreicht, dass beim Montieren des Spreizankers planmäßig ein vorgesehener Unterstand erreicht wird, ohne dass der Anwender ein spezielles Werkzeug oder zusätzliche Bauteile am Spreizanker benötigt, die auf einer Baustelle leicht verloren gehen können. Auch ist kein zusätzlicher Montageschritt notwendig. Die Distanzhülse ist als integraler Bestandteil verliersicher zwischen der Spreizhülse und der Gewindehülse am Spreizanker angeordnet, was die Montagesicherheit erhöht.

Vorzugsweise umfasst die Distanzhülse zwei Hülsenteile, die über eine Sollbruchstelle miteinander verbunden sind. Wird bei der Montage des Spreizankers die Distanzhülse in axialer Richtung verkürzt, so bricht die Distanzhülse an der Sollbruchstelle. Durch den Bruch der Sollbruchstelle entstehen aus der Distanzhülse mindestens zwei Hülsenteile, die insbesondere teleskopartig ineinanderschiebbar sind. Die Sollbruchstelle kann beispielsweise so ausgelegt sein, dass der Bruch dann erfolgt, wenn zum Drehen der Gewindehülse ein bestimmtes Drehmoment notwendig ist. Die Größe des zum Bruch der Sollbruchstelle notwendigen Drehmoments kann beispielsweise zur Größe des Drehmoments korrespondieren, das zum planmäßigen Verspreizen der Spreizhülse notwendig ist: Erst wenn die Spreizhülse planmäßig im Bohrloch verspreizt ist, bricht die Sollbruchstelle. Nach dem Bruch werden die beiden Hülsenteile durch weiteres Drehen ineinander geschoben, wofür insbesondere ein kleineres Drehmoment notwendig ist, als zum Bruch der Sollbruchstelle, so dass nach dem Bruch der Sollbruchstelle das zum Drehen notwendige Drehmoment spürbar abfällt. Die Distanzhülse wird durch das weitere Drehen verkürzt und die Gewindehülse weiter in das Bohrloch eingeschoben, da die Spreizhülse verspreizt und im Bohrloch ortsfest ist. Der Anwender hat somit eine direkte Kontrolle der ordnungsgemäßen Verspreizung der Spreizhülse. Die Distanzhülse kann so ausgebildet sein, dass sie einen Anschlag aufweist, an dem mindestens eines der beiden Hülsenteile ansteht, wenn die beiden Hülsenteile um eine vorgegebene Strecke ineinander geschoben wurden. Diese Strecke entspricht beispielsweise im Wesentlichen dem gewünschten Unterstand. Steht ein Hülsenteil am Anschlag an, so erhöht sich das zum weiteren Drehen der Gewindehülse auf die Gewindehülse aufzubringende Drehmoment merklich, was einem Anwender signalisiert, dass der gewünschte Unterstand erreicht und der Spreizanker ordnungsgemäß verspreizt ist. Die Montage des Spreizankers ist beendet.

Um mit einem Drehwerkzeug, beispielsweise einem Schraubendreher oder einem Inbusschlüssel, ein Drehmoment auf die Gewindehülse übertragen zu können, ist in einer Ausführungsform des erfindungsgemäßen Spreizankers an der Gewindehülse ein Werkzeugsitz angeordnet. Der Werkzeugsitz ist beispielsweise als Innensechskant ausgeführt. Vorzugsweise ist der Werkzeugsitz in der Gewindehülse angeordnet, was einen guten Sitz des Drehwerkzeugs gewährleistet und beispielsweise ein Abrutschen des Drehwerkzeugs vom Spreizanker verhindert. Beispielsweise ist die Gewindehülse an ihrem vorderen Ende geschlossen und der Werkzeugsitz ist vor dem Innengewinde, am Boden der Öffnung des Innengewindes, angeordnet.

Weiterhin ist bevorzugt, dass an der Distanzhülse ein Drehsicherungsmittel angeordnet ist. Das Drehsicherungsmittel verhindert im Bohrloch, dass die Distanzhülse beim Drehen der Gewindehülse mitdreht. Beispielsweise ist das Drehsicherungsmittel als radial über die Gewindehülse vorstehende Rippe, als vorspringender Zapfen oder als elastischer Flügel ausgeführt. Weiterhin ist bevorzugt, dass die Distanzhülse und die Spreizhülse miteinander drehfest gekoppelt sind. Die drehfeste Kopplung der Distanzhülse mit der Spreizhülse hat insbesondere den Vorteil, dass, wenn der Spreizanker im Bohrloch eingebracht ist, die Distanzhülse mit ihrem Drehsicherungsmittel ein Mitdrehen der Spreizhülse beim Drehen der Gewindehülse verhindert, falls die Reibung zwischen der Bohrlochwand und der Spreizhülse dafür zu gering ist.

Die Erfindung wird nachfolgend anhand eines in den Figuren dargestellten Ausführungsbeispiels näher beschrieben.

Es zeigen:
- Figur 1: einen unverspreizten erfindungsgemäßen Spreizanker nach dem Einbringen in ein Bohrloch in einer Seitenansicht;
- Figur 2: den erfindungsgemäßen Spreizanker nach Abschluss der Montage in dem Bohrloch in einer Seitenansicht; und

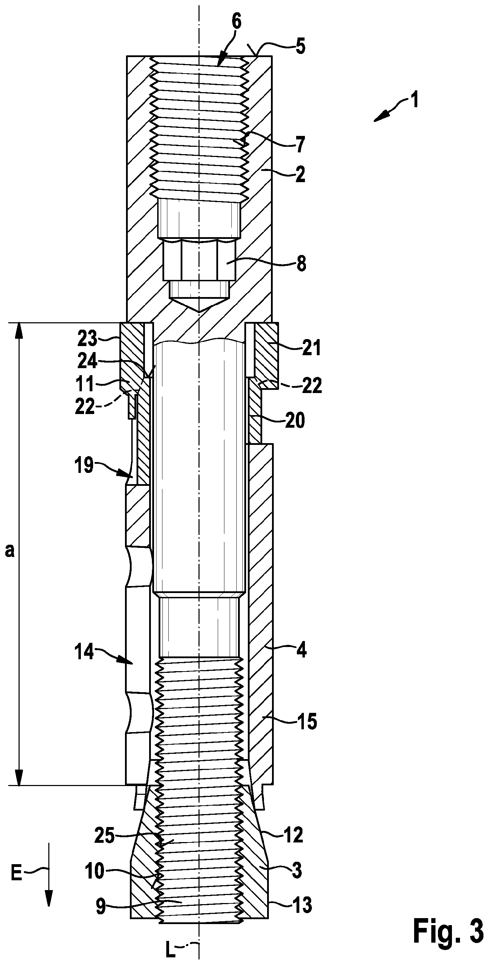

- Figur 3: einen Längsschnitt durch den unverspreizten erfindungsgemäßen Spreizanker.

In den Figuren ist ein erfindungsgemäßer Spreizanker 1 dargestellt. Der Spreizanker 1 besteht aus einer Gewindehülse 2, einem Spreizelement 3 und einer Spreizhülse 4. Die Gewindehülse 2 weist an ihrem in Einbringrichtung E hinteren Ende 5 eine Öffnung 6 in Form einer Sacklochbohrung mit einem Innengewinde 7 auf, das zur Aufnahme einer nicht dargestellten Schraube zum Befestigen eines Gegenstands (ebenfalls nicht dargestellt) dient. Am vorderen Ende der Öffnung 6 schließt sich an das Innengewinde 7 ein Werkzeugsitz 8 zur Aufnahme eines Drehwerkzeugs (nicht dargestellt) an. Bei dem Werkzeugsitz 8 handelt es sich um einen Innensechskant zur Aufnahme eines Inbusschlüssels. An die Gewindehülse 2 schließt sich in Einbringrichtung E ein gegenüber der Gewindehülse 2 im Durchmesser reduzierter Gewindebolzen 9 mit einem Außengewinde 10 an, der mit der Gewindehülse 2 einstückig ist. Auf den Gewindebolzen 9 ist eine verkürzbare Distanzhülse 11 und die Spreizhülse 4 aufgeschoben, die den Gewindebolzen 9 in Umfangsrichtung umfassen. In Einbringrichtung E vor der Spreizhülse 4 und der Distanzhülse 11 ist das Spreizelement 3 angeordnet, das die beiden Hülsen 4, 11 auf dem Gewindebolzen 9 hält.

Das Spreizelement 3 ist als Konusmutter ausgebildet, mit einer durchgehenden zentrischen Bohrung mit einem Innengewinde 25, mit dem das Spreizelement 3 auf das Außengewinde 10 des Gewindebolzens 9 aufgeschraubt ist. Über den Gewindebolzen 9 ist die Gewindehülse 2 und das Spreizelement 3 drehbar gekoppelt. Durch Drehen der Gewindehülse 2 kann das Spreizelement 3 auf das Außengewinde 10 des Gewindebolzen 9 aufgeschraubt und somit der axiale Abstand a zwischen der Gewindehülse 2 und dem Spreizelement 3 verkürzt werden. Mit "axial" ist hier in Richtung der Längsachse L des Spreizankers 1 gemeint. Das Spreizelement 3 weist einen kegelstumpfförmigen Spreizabschnitt 12 auf, der sich in Einbringrichtung E in radialer Richtung, also im Durchmesser, erweitert. An den Spreizabschnitt 12 schließt sich ein hohlzylindrischer Abschnitt als Überzugszone 13 an. Der Spreizabschnitt 12 dient zum Aufspreizen der Spreizhülse 3, die an ihrem vorderen Ende durch Schlitze 14 voneinander getrennte Spreizschenkel 15 aufweist. Durch das Aufschrauben des Spreizelements 3 auf den Gewindebolzen 9 wird das Spreizelement 3 zwischen die Spreizschenkel 15 in die Spreizhülse 4 geschoben, wodurch die Spreizschenkel 15 der Spreizhülse 4 radial nach außen aufgespreizt werden. Das Spreizelement 3 weist an seinem in Einbringrichtung E hinteren Ende halbkreisförmige Ausschnitte 19 auf, in die die Distanzhülse 11 eingreift, so dass die Distanzhülse 11 und die Spreizhülse 4 miteinander drehfest gekoppelt sind.

Die Distanzhülse 11 ist eine hohlzylindrische Hülse, die aus zwei Hülsenteilen 20, 21 besteht, die durch eine Sollbruchstelle 22 verbunden sind. Der in Einbringrichtung E vordere Hülsenteil 20 weist einen Innendurchmesser auf, der im Wesentlichen gleich dem Außendurchmesser des Gewindebolzens 9 ist, wobei der Außendurchmesser des vorderen Hülsenteil des 20 kleiner als der Außendurchmesser der Spreizhülse 4 ist. Der hintere Hülsenteil 21 weist dagegen einen Innendurchmesser auf, der größer ist, als der Innendurchmesser des vorderen Hülsenteils 20. Die beiden Hülsenteile 20, 21 sind einstückig. Wird die Distanzhülse 11 gestaucht, so bricht die Sollbruchstelle 22, die die beiden Hülsenteile 20, 21 verbindet, so dass der hintere Hülsenteil 21 über den vorderen Hülsenteil 20 geschoben und die Distanzhülse 11 dadurch in axialer Richtung verkürzt werden kann. Am hinteren Hülsenteil 21 sind radial über die Spreizhülse 4 und die Gewindehülse 2 überstehende Rippen als Drehsicherungsmittel 23 angeordnet.

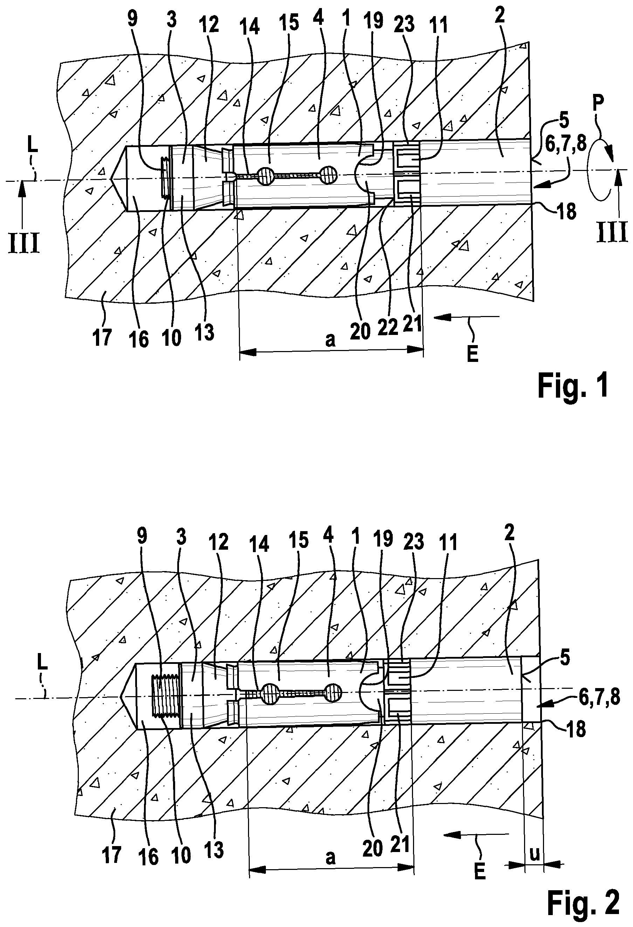

Ist der Spreizanker 1, wie in Figur 1 dargestellt, nach dem Erstellen eines Bohrlochs 16 in einem Verankerungsgrund 17, beispielsweise Beton, in das Bohrloch 16 eingebracht worden, bis das hintere Ende 5 des Spreizankers 1 bündig mit dem Bohrlochmund 18 ist, so liegt die Spreizhülse 3 an der Innenwand des Bohrlochs 16 an. Die als Drehsicherungsmittel 23 dienenden Rippen des hinteren Hülsenteils 21 der Distanzhülse 11 liegen ebenfalls an der Bohrlochwand an, so dass zwischen dem Drehsicherungsmittel 23 und der Bohrlochwand Reibung entsteht, wodurch die Distanzhülse 11 im Bohrloch 16 drehfest gehalten ist. Die Spreizhülse 4 ist durch die Anlage an der Bohrlochwand und über die halbkreisförmigen Ausschnitte 19, in die die Distanzhülse 11 eingreift, ebenfalls drehfest im Bohrloch 16 gehalten. Zudem liegt die Spreizhülse 4 am Spreizabschnitt 12 des Spreizelements 3 an, wodurch das Spreizelement 3 ebenfalls drehfest gegenüber der Gewindehülse 2 gehalten ist. Wird nun ein Inbusschlüssel als Drehwerkzeug (nicht dargestellt) in den Innensechskant des Werkzeugsitzes 8 eingeführt und die Gewindehülse 2 und dadurch der Gewindebolzen 9 in Richtung der in Figur 1 dargestellten Drehrichtung P um die Längsachse L gedreht, so wird das Spreizelement 3 auf den Gewindebolzen 9 aufgeschraubt und die Spreizhülse 4 eingezogen. Dadurch werden die Spreizschenkel 15 der Spreizhülse 4 gegen die Wand des Bohrlochs 16 gedrückt, so dass die Spreizhülse 4 durch Reibung zwischen den Spreizschenkeln 15 und der Bohrlochwand nicht nur drehfest, sondern auch axial ortsfest gehalten ist.

Durch weiteres Drehen der Gewindehülse 2 wird die Distanzhülse 11 zwischen der Spreizhülse 4 und der Gewindehülse 2 verspannt und einer axial wirkenden Druckkraft ausgesetzt, die beim Überschreiten eines bestimmten Wertes zum Bruch der Sollbruchstelle 22 zwischen den Hülsenteilen 20, 21 führt. Zum Erreichen der Kraft muss über den Werkzeugsitz 8 auf die Gewindehülse 2 ein Drehmoment mit einer definierten Größe aufgebracht werden. Nach dem Bruch der Sollbruchstelle 22 verringert sich zunächst das Drehmoment, das zum Drehen der Gewindehülse 2 notwendig ist. Durch weiteres Drehen der Gewindehülse 2 gegenüber dem orts- und drehfesten Spreizelement 3 wird der hintere Hülsenteil 21 über den vorderen Hülsenteil 20 geschoben, wodurch die Distanzhülse 11 in axialer Richtung verkürzt und die Gewindehülse 2 in Richtung der Einbringrichtung E in das Bohrloch16 bewegt wird, so dass ein Unterstand u entsteht, wie dies Figur 2 zeigt. An der hinteren Seite der vorderen Hülse 20 ist eine Anschlagfläche 24 ausgebildet, die, wenn die Gewindehülse 2 um den gewünschten Unterstand u in das Bohrloch 16 eingedreht wird, am vorderen Ende der Gewindehülse 2 anschlägt. Durch das Anschlagen der Anschlagfläche 24 an der Gewindehülse 2 erhöht sich das zum Eindrehen der Gewindehülse 2 notwendige Drehmoment, so dass der Anwender weiß, dass die Montage des Spreizankers 1 beendet ist und der nicht dargestellte Gegenstand mittels einer nicht dargestellten Schraube am Spreizanker 1 befestigt und gegen den Verankerungsgrund 17 verspannt werden kann.

Alternativ könnte die Distanzhülse 11 auch ohne Sollbruchstelle 22 ausgebildet sein und nur elastisch und/oder plastisch gestaucht werden. Beim Verkürzen durch elastisches und/oder plastisches Stauchen vergrößert sich das Drehmoment zum Drehen der Gewindehülse 2 kontinuierlich, bis ein definierter Wert für das Drehmoment erreicht ist, der dem Anwender signalisiert, dass der Montagevorgang beendet ist. Die Montage des Spreizankers 1 kann in diesem Fall beispielsweise mit einem handelüblichen Drehmomentschlüssel erfolgen.

Der Spreizanker 1 ist einfach aufgebaut, ohne dass die Gefahr besteht, dass Bauteile verloren gehen. Der Anwender muss zur Montage des erfindungsgemäßen Spreizankers 1 zudem keine zusätzlichen Montageschritte ausführen, so dass ein Anwender einen Gegenstand sicher und schnell ohne Spezialwerkzeug montieren kann.

### Bezugszeichenliste

- 1: Spreizanker
- 2: Gewindehülse
- 3: Spreizelement
- 4: Spreizhülse
- 5: hinteres Ende der Spreizankers 1
- 6: Öffnung
- 7: Innengewinde
- 8: Werkzeugsitz
- 9: Gewindebolzen
- 10: Außengewinde
- 11: Distanzhülse
- 12: Spreizabschnitt
- 13: Überzugszone
- 14: Schlitz
- 15: Spreizschenkel
- 16: Bohrloch
- 17: Verankerungsgrund
- 18: Bohrlochmund
- 19: halbkreisförmiger Ausschnitt
- 20: vorderer Hülsenteil
- 21: hinterer Hülsenteil
- 22: Sollbruchstelle
- 23: Drehsicherungsmittel
- 24: Anschlagfläche
- 25: Innengewinde des Spreizelements 3
- a: axialer Abstand zwischen der Gewindehülse 2 und dem Spreizelement 3
- E: Einbringrichtung
- L: Längsachse
- P: Drehrichtung
- u: Unterstand

## Patentansprüche

1. Spreizanker (1) mit einer Gewindehülse (2), einem Spreizelement (3) und einer Spreizhülse (4),
wobei die Gewindehülse (2) in Einbringrichtung (E) hinten ein Innengewinde (7) zum Befestigen eines Gegenstandes mit einer Schraube aufweist, und
wobei die Gewindehülse (2) mit dem Spreizelement (3) drehbar gekoppelt ist, so dass durch Drehen der Gewindehülse (2) der axiale Abstand (a) zwischen der Gewindehülse (2) und dem Spreizelement (3) verkürzbar ist,
wodurch die Spreizhülse (4) durch das Spreizelement (3) in radialer Richtung aufgespreizt wird,
**dadurch gekennzeichnet,**
**dass** in axialer Richtung zwischen der Gewindehülse (2) und der Spreizhülse (4) eine in axialer Richtung verkürzbare Distanzhülse (11) angeordnet ist, so dass der Spreizanker (1) zur Verwendung in einem Verfahren nach einem der Ansprüche 8 bis 11 geeignet ist.

2. Spreizanker nach Anspruch 1, **dadurch gekennzeichnet, dass** die Distanzhülse (11) zwei Hülsenteile (20, 21) umfasst, die über eine Sollbruchstelle (22) miteinander verbunden sind.

3. Spreizanker nach Anspruch 2, **dadurch gekennzeichnet, dass** die Distanzhülse (11) eine Anschlagfläche (24) aufweist, die an der Gewindehülse (2) ansteht, wenn die beiden Hülsenteile (20, 21) um eine vorgegebene Strecke ineinander geschoben wurden.

4. Spreizanker nach einem der Ansprüche 1 bis 3, **dadurch gekennzeichnet, dass** an der Gewindehülse (2) ein Werkzeugsitz (8) für ein Drehwerkzeug zum Übertragen eines Drehmoments auf die Gewindehülse (2) angeordnet ist.

5. Spreizanker nach einem der Ansprüche 1 bis 4, **dadurch gekennzeichnet, dass** der Werkzeugsitz (8) in der Gewindehülse (2) angeordnet ist.

6. Spreizanker nach einem der Ansprüche 1 bis 5, **dadurch gekennzeichnet, dass** an der Distanzhülse (11) ein Drehsicherungsmittel (23) angeordnet ist.

7. Spreizanker nach einem der Ansprüche 1 bis 6, **dadurch gekennzeichnet, dass** die Distanzhülse (11) und die Spreizhülse (4) miteinander drehfest gekoppelt sind.

8. Verfahren zur Montage eines Spreizankers (1) nach einem der Ansprüche 1 bis 7 in einem Verankerungsgrund (17), das folgende Schritte umfasst:
a) Erstellen eines Bohrlochs (16) im Verankerungsgrund (17);
b) Einbringen des Spreizankers (1) in das Bohrloch (16), so weit, bis das in Einbringrichtung (E) hintere Ende (5) des Spreizankers (1) im Wesentlichen bündig mit dem Bohrlochmund (18) ist; und
c) Drehen der Gewindehülse (2) gegenüber dem Spreizelement (3), so dass sich der axiale Abstand zwischen der Gewindehülse (2) und dem Spreizelement (3) verkürzt und die Spreizhülse (4) in radialer Richtung aufgespreizt und gegen die Bohrlochwand gepresst wird, so dass sie im Bohrloch (16) ortsfest ist;
**gekennzeichnet durch** den Schritt:
d) Drehen der Gewindehülse (2), so dass die Distanzhülse (11) in axialer Richtung verkürzt und die Gewindehülse (2) in das Bohrloch (16) eingezogen wird, so dass sie unter dem Bohrlochmund (18) untersteht.

9. Verfahren nach Anspruch 8, wobei der Schritt d) folgende Teilschritte umfasst:
d1) Drehen der Gewindehülse (2);
d2) Bruch der Distanzhülse (11) an einer Sollbruchstelle (22), so dass mindestens zwei ineinanderschiebbare Hülsenteile (20, 21) entstehen; und
d3) Ineinanderschieben der Hülsenteile (20, 21) und Eintreiben der Gewindehülse (2) in das Bohrloch (16) durch weiteres Drehen der Gewindehülse (2).

10. Verfahren nach Anspruch 9, wobei der Schritt d) zusätzlich folgenden Teilschritt umfasst:
d4) Anstehen einer an einem der Hülsenteile (20, 21) ausgebildeten Anschlagfläche (24) der Gewindehülse (2), wenn die beiden Hülsenteile (20, 21) um eine vorgegebene Strecke ineinander geschoben wurden, derart, dass sich das zum Drehen der Gewindehülse (2) aufzubringende Drehmoment merklich erhöht.

11. Verfahren nach Anspruch 10, **dadurch gekennzeichnet, dass** die vorgegebene Strecke, um die die beiden Hülsenteile (20, 21) ineinander geschoben wurden, einem gewünschten Unterstand u der Gewindehülse (2) unter die Oberfläche des Verankerungsgrunds (17) entspricht.

## Claims

1. Expansible anchor (1) having a threaded sleeve (2), an expander element (3) and an expansion sleeve (4),
wherein the threaded sleeve (2) has, at the rear in the direction of introduction (E), an internal thread (7) for fixing an article with a screw, and wherein the threaded sleeve (2) is rotatably coupled to the expander element (3) so that by rotation of the threaded sleeve (2) the axial distance (a) between the threaded sleeve (2) and the expander element (3) can be made shorter,
with the result that the expansion sleeve (4) is expanded in a radial direction by the expander element (3),
**characterised in that**
a spacer sleeve (11), which can be made shorter in the axial direction, is arranged in the axial direction between the threaded sleeve (2) and the expansion sleeve (4), so that the expansible anchor (1) is suitable for use in a method according to any one of claims 8 to 11.

2. Expansible anchor according to claim 1, **characterised in that** the spacer sleeve (11) comprises two sleeve parts (20, 21) which are connected to one another via a predetermined breaking point (22).

3. Expansible anchor according to claim 2, **characterised in that** the spacer sleeve (11) has a stop face (24) which abuts against the threaded sleeve (2) when the two sleeve parts (20, 21) have been pushed one into the other by a specified distance.

4. Expansible anchor according to any one of claims 1 to 3, **characterised in that** on the threaded sleeve (2) there is arranged a tool seat (8) for a rotary tool for transmitting a torque to the threaded sleeve (2).

5. Expansible anchor according to any one of claims 1 to 4, **characterised in that** the tool seat (8) is arranged in the threaded sleeve (2).

6. Expansible anchor according to any one of claims 1 to 5, **characterised in that** an anti-rotation means (23) is arranged on the spacer sleeve (11).

7. Expansible anchor according to any one of claims 1 to 6, **characterised in that** the spacer sleeve (11) and the expansion sleeve (4) are coupled to one another against relative rotation.

8. Method of mounting an expansible anchor (1) according to any one of claims 1 to 7 in an anchoring substrate (17), comprising the following steps:
a) creation of a drilled hole (16) in the anchoring substrate (17);
b) introduction of the expansible anchor (1) into the drilled hole (16) until the rear end (5) of the expansible anchor (1) in the direction of introduction (E) is substantially flush with the mouth (18) of the drilled hole; and
c) rotation of the threaded sleeve (2) relative to the expander element (3) so that the axial distance between the threaded sleeve (2) and the expander element (3) is made shorter and the expansion sleeve (4) is expanded in a radial direction and pressed against the wall of the drilled hole so that it is fixed in position in the drilled hole (16);
**characterised by** the step:
d) rotation of the threaded sleeve (2) so that the spacer sleeve (11) is made shorter in the axial direction and the threaded sleeve (2) is drawn into the drilled hole (16) so that it is in a recessed position below the mouth (18) of the drilled hole.

9. Method according to claim 8, wherein step d) comprises the following sub-steps:
d1) rotation of the threaded sleeve (2);
d2) breakage of the spacer sleeve (11) at a predetermined breaking point (22) so that at least two sleeve parts (20, 21) are formed which can be pushed one into the other; and
d3) pushing of the sleeve parts (20, 21) one into the other and driving of the threaded sleeve (2) into the drilled hole (16) by further rotation of the threaded sleeve (2).

10. Method according to claim 9, wherein step d) comprises additionally the following sub-step:
d4) abutment of a stop face (24) formed on one of the sleeve parts (20, 21) against the threaded sleeve (2) when the two sleeve parts (20, 21) have been pushed one into the other by a specified distance, in such a way that the torque to be applied for rotating the threaded sleeve (2) noticeably increases.

11. Method according to claim 10, **characterised in that** the specified distance by which the two sleeve parts (20, 21) have been pushed one into the other corresponds to a desired depth of recess u of the threaded sleeve (2) below the surface of the anchoring substrate (17).

## Revendications

1. Ancrage à expansion (1) avec une douille filetée (2), un élément d'expansion (3) et une douille expansible (4),
sachant que la douille filetée (2) présente, en arrière dans la direction d'introduction (E), un filetage intérieur (7) pour la fixation d'un objet avec une vis,
et sachant que la douille filetée (2) est couplée en rotation à l'élément d'expansion (3), de sorte que, par rotation de la douille filetée (2), on peut réduire la distance axiale (a) entre la douille filetée (2) et l'élément d'expansion (3),
la douille expansible (4) étant ainsi élargie en direction radiale par l'élément d'expansion (3),
**caractérisé en ce qu'**une douille d'écartement (11) pouvant être raccourcie en direction axiale est disposée entre la douille filetée (2) et la douille expansible (4) en direction axiale, de sorte que l'ancrage à expansion (1) convient pour l'utilisation dans un procédé selon l'une des revendications 8 à 11.

2. Ancrage à expansion selon la revendication 1, **caractérisé en ce que** la douille d'écartement (11) comprend deux parties de douille (20, 21) qui sont reliées entre elles par l'intermédiaire d'une zone de rupture imposée (22).

3. Ancrage à expansion selon la revendication 2, **caractérisé en ce que** la douille d'écartement (11) présente une surface de butée (24) qui vient buter contre la douille filetée (2) lorsque les deux parties de douille (20, 21) ont été enfilées l'une dans l'autre d'une distance prédéterminée.

4. Ancrage à expansion selon l'une des revendications 1 à 3, **caractérisé en ce qu'**une assise d'outil (8) pour un outil rotatif destiné à transmettre un couple de rotation à la douille filetée (2) est disposée sur la douille filetée (2).

5. Ancrage à expansion selon l'une des revendications 1 à 4, **caractérisé en ce que** l'assise d'outil (8) est disposée dans la douille filetée (2).

6. Ancrage à expansion selon l'une des revendications 1 à 5, **caractérisé en ce qu'**un moyen de blocage en rotation (23) est disposé sur la douille d'écartement (11).

7. Ancrage à expansion selon l'une des revendications 1 à 6, **caractérisé en ce que** la douille d'écartement (11) et la douille expansible (4) sont couplées entre elles en solidarité de rotation.

8. Procédé de montage d'un ancrage à expansion (1) selon l'une des revendications 1 à 7 dans un support d'ancrage (17), qui comprend les étapes suivantes :
a) réalisation d'un trou foré (16) dans le support d'ancrage (17) ;
b) introduction de l'ancrage à expansion (1) dans le trou foré (16) jusqu'à ce que l'extrémité arrière (5), dans la direction d'introduction (E), de l'ancrage à expansion (1) soit essentiellement à fleur de l'embouchure (18) du trou foré ; et
c) rotation de la douille filetée (2) par rapport à l'élément d'expansion (3), de sorte que la distance axiale entre la douille filetée (2) et l'élément d'expansion (3) se réduit et que la douille expansible (4) est élargie en direction radiale et pressée contre la paroi du trou foré, de sorte qu'elle est en position fixe dans le trou foré (16) ;
**caractérisé par** l'étape suivante :
d) rotation de la douille filetée (2), de sorte que la douille d'écartement (11) se raccourcit en direction axiale et que la douille filetée (2) est rentrée dans le trou foré (16), de sorte qu'elle se trouve en dessous de l'embouchure (18) du trou foré.

9. Procédé selon la revendication 8, sachant que l'étape d) comprend les étapes partielles suivantes :
d1) rotation de la douille filetée (2) ;
d2) rupture de la douille d'écartement (11) au niveau d'une zone de rupture imposée (22), de sorte qu'on obtient au moins deux parties de douille (20, 21) pouvant être enfilées l'une dans l'autre ; et
d3) enfilage des parties de douille (20, 21) l'une dans l'autre et enfoncement de la douille filetée (2) dans le trou foré (16) par une nouvelle rotation de la douille filetée (2).

10. Procédé selon la revendication 9, sachant que l'étape d) comprend en outre l'étape partielle suivante :
d4) arrivée en butée contre la douille filetée (2), lorsque les deux parties de douille (20, 21) ont été enfilées l'une dans l'autre d'une distance prédéterminée, d'une surface de butée (24) configurée sur une des parties de douille (20, 21), de telle sorte que le couple de rotation à exercer pour faire tourner la douille filetée (2) augmente de manière sensible.

11. Procédé selon la revendication 10, **caractérisé en ce que** la distance prédéterminée de laquelle les deux parties de douille (20, 21) ont été enfilées l'une dans l'autre correspond à une distance souhaitée u de la douille filetée (2) en dessous de la surface du support d'ancrage (17).
